# EUROPÄISCHE PATENTANMELDUNG

(11) **EP 2 690 411 A1**
(43) Veröffentlichungstag der Anmeldung: **29.01.2014**
(21) Anmeldenummer: 12007874.6
(22) Anmeldetag: 22.11.2012
(51) Int. Cl.: G01D 5/20

(54) **Messvorrichtung für Hubbewegungen**

(30) Priorität: 24.07.2012 DE 102012014642
(71) Anmelder: Linde Aktiengesellschaft, 80331 München (DE)
(72) Erfinder: Nagl, Christoph, 2534 Alland (AT)
(74) Vertreter: Kasseckert, Rainer

(57) **Zusammenfassung**

Es wird eine Vorrichtung beschrieben, die wenigstens ein oszillierendes Bauteil, das wenigstens ein freies Ende besitzt, aufweist.

Erfindungsgemäß

a) weist das oszillierende Bauteil (1) an seinem freien Ende einen Kegel (2) auf,
b) dessen Länge wenigstens dem Hub des oszillierenden Bauteiles (1) entspricht, und
c) dem Kegel (2) ist wenigstens ein Wirbelstromsensor (3, 3') zugeordnet,
d) wobei der/die Wirbelstromsensor(en) (3, 3') im Hubbereich des Kegels (2) angeordnet ist/sind.

## Beschreibung

Die Erfindung betrifft eine Vorrichtung, aufweisend wenigstens ein oszillierendes Bauteil, das wenigstens ein freies Ende besitzt. Insbesondere betrifft die Erfindung einen Linearmotor, der wenigstens eine Kolbenstange aufweist.

Die der Thematik der Erfindung zugrunde liegende Problematik sowie die Erfindung selbst seien nachfolgend anhand von Linearmotoren erläutert.

Bei Linearmotoren, insbesondere bei leistungsstarken Servotube-Linearmotoren, erweist sich die Positionserfassung der Kolbenstange häufig als problematisch und ist im Regelfall nur mit einem erheblichen konstruktiven Aufwand zu realisieren. Eine exakte Positionserfassung ist jedoch erforderlich, da ansonsten nicht gewährleistet ist, dass präzise Weg-Zeit-Funktionen entsprechend der jeweiligen Anwendung eingehalten werden. Dies wirkt sich insbesondere bei hohen Geschwindigkeiten bzw. Frequenzen negativ aus, da entprechende Regeleingriffe mitunter zu spät oder ungeeignet eingeleitet werden.

Bisher wird eine Seite des Linearmotors mit einem Messsystem zur Positionserfassung der Kolbenstange ausgestattet. Dies hat jedoch zur Folge, dass die Kraftabgabe an der betreffenden Seite des Linearmotors im Regelfall nicht möglich ist. Als Messsysteme zur Positionserfassung von Kolbenstangen kommen bisher üblicherweise optische Wegmesssysteme oder Hallsensoren zur Anwendung.

Aufgrund hoher Wicklungsdichten und dementsprechend kompakten Bauformen leistungsstarker Linearmotoren ist es konstruktiv vergleichsweise aufwendig oder ggf. nicht möglich, Messsysteme zur Positionsverfassung der Kolbenstange in den Linearmotoren zu integrieren. Aus diesem Grunde werden üblicherweise externe Messvorrichtungen, die der kraftabgebenden Seite des Linearmotores gegenüber liegen, vorgesehen. Das Anbringen einer herkömmlichen Messvorrichtung an Linearmotoren führt jedoch im Regelfall dazu, dass die Abmessungen der Linearmotoren in unerwünschter Weise ansteigen. Gängige Messvorrichtungen haben darüber hinaus den Nachteil, dass sie auf tiefe Temperaturen und hohe Umgebungsdrücke empfindlich reagieren oder diesen nicht standhalten.

Aufgabe der vorliegenden Erfindung ist es, eine gattungsgemäße Vorrichtung, aufweisend wenigstens ein oszillierendes Bauteil, anzugeben, die ein konstruktiv vergleichsweise einfaches Messsystem zur Positionserfassung des oszillierenden Bauteiles aufweist, wobei dieses zudem für tiefe Temperaturen und hohe Umgebungsdrücke geeignet ist.

Zur Lösung dieser Aufgabe wird eine Vorrichtung vorgeschlagen, die dadurch gekennzeichnet ist, dass
a) das oszillierende Bauteil an seinem freien Ende einen Kegel aufweist,
b) dessen Länge wenigstens dem Hub des oszillierenden Bauteiles entspricht, und
c) dem Kegel wenigstens ein Wirbelstromsensor zugeordnet ist,
d) wobei der/die Wirbelstromsensor(en) im Hubbereich des Kegels angeordnet ist/sind.

Sofern es sich bei der erfindungsgemäßen Vorrichtung um einen Linearmotor handelt, stellt dessen Kolbenstange das oszillierende Bauteil dar.

Bei einem Linearmotor erfolgt die Positionserfassung des Kolbenstange nunmehr über eine Detektion der Veränderung der Messspaltbreite zwischen dem Kegel und dem oder den Wirbelstromsensoren. Wirbelstromsensoren zählen zu den sog. berührungslosen induktiven Distanzsensoren und basieren auf dem Prinzip der Wirbelstrombildung durch Spannungsinduktion von leitenden Körpern in einem Magnetfeld. Die radiale Abstandsänderung zwischen Kegel und Wirbelstromsensor bzw. Sensorkopf wird hierbei in eine Positionserfassung der Kolbenstange in Hubrichtung umgewandelt. Die oszillierende Bewegung der Kolbenstange bzw. des an ihr montierten Kegels verursacht eine Veränderung der Messspaltbreite. Hierbei wird die größte Messspaltbreite in der Endlage des unteren Totpunkts der Kolbenstange erreicht und die geringste Messspaltbreite folglich im oberen Totpunkt der Kolbenstange. Über die Kegelsteigung kann somit jeder Messwert exakt einer axialen Position der Kolbenstange des Linearmotors zugeordnet werden. Wirbelstromsensoren weisen eine sehr hohe Auflösung auf, weswegen trotz Kegelübersetzung minimale Hubbewegungen der Kolbenstange erfasst werden können.

Die erfindungsgemäße Vorrichtung bzw. den erfindungsgemäßen Linearmotor weiterbildend wird vorgeschlagen, dass die Länge des Kegels größer ist als der Hub des oszillierenden Bauteiles bzw. der Kolbenstange.

Mittels dieser Ausgestaltung der erfindungsgemäßen Vorrichtung wird sichergestellt, dass sich das Messfeld des bzw. der Wirbelstromsensoren, das den Sensorkopfdurchmesser überragt, nicht über das Ende des Kegels bzw. die durch ihn definierte Messstrecke, die dem Hub der Kolbenstange entspricht, hinaus erstreckt, was im oberen Totpunkt der Kolbenstange in verfälschten Messergebnissen und damit zu einer verfälschten Positionserfassung resultieren könnte.

In vorteilhafter Weise sind zwei oder mehr Wirbelstromsensoren vorgesehen, wobei diese bzw. wenigstens zwei Wirbelstromsensoren einander gegenüberliegend angeordnet sind.

Mittels dieser vorteilhaften Ausgestaltung der erfindungsgemäßen Vorrichtung wird sichergestellt, dass mögliche unerwünschte, radiale Auslenkungen des oszillierenden Bauteiles und des mit ihr verbundenen Kegels nicht zu verfälschten Messergebnissen und damit zu einer verfälschten Positionserfassung führen. Vielmehr können nunmehr die Messwerte der (beiden) Wirbelstromsensoren miteinander verrechnet und so der arithmetische Mittelwert ermittelt werden.

Die zur Verfügung stehenden Wirbelstromsensoren sind vergleichsweise unempfindlich gegen jegliche nichtmetallische Verschmutzung, weshalb sie auch bei Einsatzfällen zur Anwendung kommen können, bei denen eine vergleichsweise hohe Schmutzbelastung gegeben ist. Darüber hinaus vertragen Wirbelstromsensoren vergleichsweise niedrige Temperaturen sowie hohe Drücke und können deshalb auch bei Tieftemperaturanwendungen, wie bspw. Flüssig-Wasserstoff-Pumpen und -Verdichtern Anwendung finden.

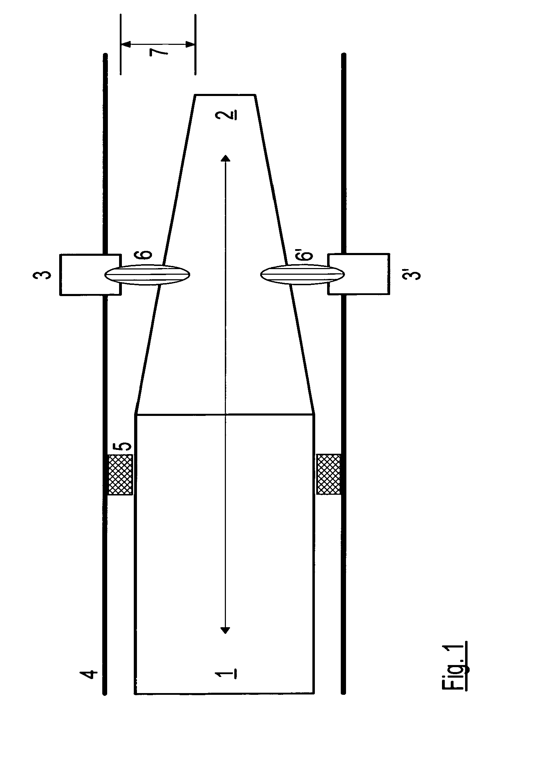

Die erfindungsgemäße Vorrichtung sowie weitere vorteilhafte Ausgestaltungen derselben seien nachfolgend anhand des in der Figur 1 dargestellten Ausführungsbeispieles näher erläutert. Dieses zeigt eine nicht maßstabsgerechte, schematisierte Schnittdarstellung eines Teilbereiches eines erfindungsgemäßen Linearmotors, bei dem die Kolbenstange das oszillierende Bauteil darstellt.

In der Figur 1 dargestellt ist das Kolbengehäuse 4 des Linearmotors, in dem die Kolbenstange 1 verschiebbar angeordnet ist. Die Abstandshalter 5 dienen hierbei der Führung der Kolbenstange 1. In der Figur 1 nicht dargestellt ist die die Kolbenstange 1 zugeordnete Antriebsvorrichtung.

Der Kolbenstange 1 ist erfindungsgemäß ein metallischer Kegel 2 zugeordnet. Dessen Länge entspricht wenigstens dem Hub der Kolbenstange 1, vorzugsweise weist der Kegel 2 eine über den Hub der Kolbenstange 1 hinausgehende Länge auf. Bei den in der Figur 1 dargestellten Ausführungsform des erfindungsgemäßen Linearmotors sind zwei gegenüberliegende Wirbelstromsensoren 3 und 3' vorgesehen. Zwischen den Wirbelstromsensoren 3/3' und dem Kegel 2 besteht ein Messspalt, dessen maximale Breite durch den Pfeil 7 dargestellt ist. Der bzw. die vorzusehenden Wirbelstromsensoren 3/3' sind derart anzuordnen bzw. zu dimensionieren, dass das durch sie erzeugte Wirbelstrom-Messfeld 6/6' den Messspalt während der oszillierenden Bewegung der Kolbenstange 1 zu jeder Zeit überstreicht, da nur so eine exakte Messung der Messspaltbreite und damit Positionserfassung der Kolbenstange 1 realisierbar ist.

Wirbelstromsensoren bzw. deren Sensorköpfe weisen eine sehr kompakte Bauform auf, weswegen sie vergleichsweise unproblematisch und platzsparend innerhalb eines Linearmotors angeordnet werden können.

Der erfindungsgemäße Gedanke der Wegemessung und damit der Positionserfassung eines oszillierenden Bauteiles ist insbesondere für Anwendungen geeignet, bei denen hohe Anforderungen an Tieftemperaturbeständigkeit, Druckfestigkeit sowie Unempfindlichkeit gegen nichtmetallische Verschmutzung vorherrschen.

## Patentansprüche

1. Vorrichtung, aufweisend wenigstens ein oszillierendes Bauteil, das wenigstens ein freies Ende besitzt, **dadurch gekennzeichnet, dass**
a) das oszillierende Bauteil (1) an seinem freien Ende einen Kegel (2) aufweist,
b) dessen Länge wenigstens dem Hub des oszillierenden Bauteiles (1) entspricht, und
c) dem Kegel (2) wenigstens ein Wirbelstromsensor (3, 3') zugeordnet ist,
d) wobei der/die Wirbelstromsensor(en) (3, 3') im Hubbereich des Kegels (2) angeordnet ist/sind.

2. Vorrichtung nach Anspruch 1, **dadurch gekennzeichnet, dass** die Länge des Kegels (2) größer als der Hub des oszillierenden Bauteiles (1) ist.

3. Vorrichtung nach Anspruch 1 oder 2, **dadurch gekennzeichnet, dass** wenigstens zwei Wirbelstromsensoren (3, 3') vorgesehen und diese oder, im Falle von mehr als zwei Wirbelstromsensoren (3, 3'), wenigstens zwei Wirbelstromsensoren (3, 3') einander gegenüberliegend angeordnet sind.

4. Vorrichtung nach einem der vorhergehenden Ansprüche 1 bis 3, **dadurch gekennzeichnet, dass** es sich bei der Vorrichtung um einen Linearmotor handelt, dessen oszillierendes Bauteil (1) wenigstens eine Kolbenstange (1) ist.
